# EUROPEAN PATENT APPLICATION

(11) **EP 4 802 893 A1**
(43) Date of publication of application: **09.09.2026**
(21) Application number: 25161745.2
(22) Date of filing: 05.03.2025
(51) Int. Cl.: A01N 37/02, A01N 37/36, A01P 13/00

(54) **HERBICIDE COMPOSITION**

(71) Applicant: SAN Agrow Holding GmbH, 3130 Herzogenburg (AT)
(72) Inventor: MANICA, Andrea, 1020 Wien (AT); OMIDVAR, Reza, 2102 Hagenbrunn (AT); PARKER, Williard Lawrence, Encinitas, CA 92024 (US)
(74) Representative: Cunow, Gerda

(57) **Abstract**

A herbicide composition consisting of at least one fatty acid or a salt thereof, an emulsifier and/or solubilizer, as well as, if necessary further auxiliary substances, wherein the composition consists of a total amount of between 60 and 90 % by weight, preferably between 65 and 80 % by weight of a mixture consisting of two medium chain fatty acids, especially a mixture of C8 and C10 fatty-acids, up to 14 % by weight of a mixture of at least two different emulsifiers and/or surfactants, up to 10 % by weight of a stability enhancer and optionally one efficacy enhancer and a diluent.

## Description

The present invention relates to a herbicide composition consisting of at least one fatty acid or a salt thereof, an emulsifier and/or solubilizer, as well as, if necessary, further auxiliary substances.

Harmful substances or also pests such as microorganisms or fungi can often attack and destroy crops. To avoid or mitigate the effects of such an attack with harmful substances or also pests there are a variety of herbicide compounds on the market, which herbicide or pesticide compounds may be of natural origin or based on synthetic materials.

The most effective herbicide compositions presently on the market, such as for example Glyphosate contain synthetic herbicides which lead to the safe destruction of harmful plants, but it has now been proven that they can enter the food chain due to metabolization and can also be harmful to the final consumer. It has also recently been proven that these substances can be carcinogenic, which is why banning them is constantly being considered. Attempts were therefore made to develop non-harmful herbicides or fungicides with which harmful plants or fungi can be rendered harmless, but the substances used do not pose a health risk to humans or animals. Examples of such herbicides are described, for example, in US 7,820,594, in which a composition containing a fatty acid with 5 to 22 carbon atoms or a salt thereof, an organic carboxylic acid or a salt thereof and an emulsifier is used as a pesticide composition. With such a composition, which was provided as a liquid concentrate or a ready-to-use solution, a variety of plant diseases caused by fungi can be delayed or at least partially inhibited. Nevertheless, the results are not satisfactory since relatively large amounts of the selected composition and, above all, a repeated application is required for the most complete inhibition possible.

The present invention aims to provide a herbicidal composition which has to be applied to the plants in extremely small quantities and which is harmless for to the environment and health.

To solve this problem, the invention is essentially characterized in that the composition consists of a total amount of between 60 and 90 % by weight, preferably between 65 and 80 % by weight of a mixture consisting of two medium chain fatty acids, up to 14 % by weight of a mixture of at least two different emulsifiers and/or surfactants, up to 10 % by weight of a stability enhancer and optionally one efficacy enhancer. In comparison to known herbicides, it has been shown that the composition according to the invention is extremely soluble even at low temperatures, which is why, compared to conventional herbicides, it can be used in very small amounts while at the same time being effective against a large number of weeds and grasses. At the same time, it does not contain any components that are harmful or even pathogenic to the human or animal organism, so that the herbicide according to the invention also meets strict requirements with regard to product safety. According to the invention also sodium and/or potassium salts of the medium chain fatty acids may be contained. The use of sodium and/or potassium salts makes the medium-chain fatty acids even more soluble and, in addition to the herbicidal effect, can also provide essential elements for most plants, such as potassium.

In particular, it could surprisingly be shown that a herbicide composition containing a mixture of two medium chain fatty acids and a mixture of at least two emulsifiers and/or surfactants shows better solubility in water than a herbicide solution of the same composition which however only contains one of the medium-chain fatty acids.

Regarding the solubility of medium-chain fatty acids in water, it is known to those skilled in the art to be not particularly good and in particular medium-chain fatty acids that are solid at room temperature such as capric acid are very poorly soluble in water. However, by providing at least two different emulsifiers, it is possible to make the medium-chain fatty acids significantly more water-soluble than if only one of the emulsifiers is used, so that not only the effect of the respective medium-chain fatty acid used can be optimally exploited, but above all the quantities used can be significantly reduced compared to conventional formulations. This is particularly advantageous for environmental reasons.

According to a further development of the invention, the herbicide composition is designed in such a way that the mixture of two medium chain fatty acids consists of 40 to 50 % by weight, especially 45 to 49 % by weight of caprylic acid and 28 to 35 % by weight, especially 29 to 33 % by weight of capric acid. Because the mixture consists of two medium chain fatty acids, namely of 40 to 50 % by weight, especially 45 to 49 % by weight of caprylic acid and 28 to 35 % by weight, especially 29 to 33 % by weight of capric acid, a surprisingly strong synergistic effect was achieved. This is particularly surprising since herbicides have already been described in the prior art which contain a medium-chain fatty acid, such as caprylic acid and mineral oil, but for which no synergistic effect could be demonstrated in terms of the speed and completeness of dissolution in water. In this respect, it has also been shown in the literature that the effectiveness of caprylic acid is significantly higher than that of capric acid, but that a combination of both medium chain fatty acids surprisingly has a stronger herbicidal effect than the sum of the effects of the individual substances was not obvious and is therefore very surprising.

According to a further development of the invention, the herbicide composition is designed in such a way that the at least two different emulsifiers and/or surfactants contain at least one anionic and at least on non-ionic surfactant and/or emulsifier. By containing at least one anionic and one non-ionic surfactant and/or emulsifier in the herbicide, an even better and faster dissolution of the active components of the herbicide in water is achieved before they are applied to the plants, which is why in practice small amounts of the active components are used, especially the medium-chain fatty acids, which can be found to be sufficient.

An excellent effect is achieved with small amounts of medium chain fatty acids used at the same time, which additionally contain up 5 % by weight, preferably up to 4,5 % by weight of an anionic surfactant and/or emulsifier, and up to 9 % by weight, preferably up to 8 % by weight of one, preferably two different non-ionic surfactants and/or emulsifiers. In particular, the non-ionic surfactants contribute to a rapid dissolution of the non-ionic substances contained in the mixture, whereas anionic surfactants contribute to the dissolution of saponified fatty acids, such as sodium or potassium salts of medium chain fatty acids, so that the herbicide can be used in extremely small quantities under a wide range of conditions. This includes environmental conditions such as temperature and humidity as well as the certainty that the herbicide is completely harmless in subsequent use of the affected crops. Furthermore, it has been shown that such a mixture containing at least two surface-active substances and/or emulsifiers can stabilize the suspension compared to conventional mixtures in such a way that it can be stored for a long time without segregation and can therefore be used immediately after dilution without applying further homogenization steps.

However, to achieve the best results, it is advisable to apply the herbicidal composition under dry environmental conditions to dry leaf surfaces at medium temperatures between 10 and 35 °C in order to not have to worry about the composition being accidentally washed off the plant surface and to ensure good penetration of the composition into the leaves of the plants.

The fact that a mixture of non-ionic and anionic surface-active agents and/or emulsifiers is used makes it possible to meet a wide range of weather conditions. For example, the use of an anionic surface-active agent helps the herbicide to adhere to the leaf surface, as the leaves are cationically charged in warm and sunny conditions. The anionic surfactant also helps penetrate into the cytoplasm to attach the chloroplast membrane. On the other hand, the use of a non-ionic surface-active agent supports the penetration of the herbicide into the leaf surface and dissolves the cuticle and chloroplast membrane there.

Best results can be obtained if the herbicide is developed in such a way that the emulsifies and surfactants are selected from liquid polymers selected from the group consisting of polyoxyethylene alkyl ether phosphate, polyalkylene oxid block copolymers, modified styrene acrylic copolymers, polymeric esters or alkoxylated phosphate esters or mixtures thereof.

In order to reliably prevent segregation of the herbicide composition according to the invention, the invention is further developed in such a way that methylated soy bean oil is included as the stability enhancer. In order to be able to avoid producing the composition immediately before application and to ensure a long storage period without any segregation, methylated soybean oil can be mixed in, which surprisingly increases the stability of the suspension to such an extent that it can be stored at least for several weeks or even up to 6 months without segregation. Even storage times of up to 3 years are possible, although in these cases the herbicidal composition should be shaken vigorously before use in order to achieve thorough mixing of the components again.

According to a further development of the invention, the herbicide composition is designed in such a way that up to 12 % by weight, preferably up to 4 % by weight of an efficacy enhancer are contained. Field tests have shown that an increase in effectiveness can be achieved if an additional substance, an efficiency enhancer, is added to the herbicide. By adding this efficiency-enhancing substance, on the one hand the effect of the herbicide is significantly improved, on the other hand it should be noted that in such a case the product composition of the herbicide becomes more complex and it therefore becomes more difficult to obtain a market approval.

According to the invention, substances suitable for increasing efficiency are organic acids with fewer than 4 carbon atoms which have proven to be suitable for increasing efficiency. All substances that can be used to increase efficiency are low-chain carboxylic acids with a maximum of 4 carbon atoms. According to a further development of the invention, the herbicide composition is designed in such a way that the efficacy enhancer is selected from acetic acid, citric acid, lactic acid, oxalic acid or mixtures of two or more thereof.

According to a further development of the invention, the herbicide composition is designed in such a way that it further contains additional amounts of methylated-soybean oil (Me-Soy) as a diluent. Surprisingly, it turned out that Me-Soy can not only be used as a stability-enhancing substance but also acts as an excellent diluent. This is particularly interesting because methylated soybean-oil is generally perceived as environmentally friendly due to its renewable origin, high biodegradability, low toxicity as well as lower ecological impacts. Moreover, it has been shown that the introduction of methylated soybean oil as a diluent can further enhance the product stability. Finally, since one and the same substance can be used for multiple purposes, the complexity of the product is kept low and a few different substances are sufficient in order to be able to provide a herbicide composition that is equally efficient and stable.

For a particularly good effect and in particular uniform distribution of the herbicide composition on leaf surfaces, the invention is further developed in such a way that it exists as a finely divided oil in water emulsion.

The invention is explained in more detail below using exemplary embodiments, in these examples, formulations according to the present invention have been compared with at least one formulation according to US 7,820,594.

As herbicide composition A according to the present invention a concentrate consisting of 47,4 % by weight of caprylic acid and 31,6 % by weight of capric acid, 4,0 % by weight of sodium dioctyl sulphosuccinate as anionic emulsifier, and 8 % by weight of a mixture of sorbitan ethoxylate and castor oil ethoxylate as non-ionic emulsifier and/or surfactant and 9 % by weight methylated soy bean oil as stability enhancer in water as carrier. The composition was diluted directly before use.

The herbicide composition according to the present invention was compared with
1. a composition consisting of 35 % by weight of glycolic acid and 35 % by weight of caprylic acid in mineral oil, 4,0 % by weight of sodium dioctyl sulphosuccinate as anionic emulsifier and 8 % by weight of a mixture of sorbitan ethoxylate and castor oil ethoxylate as non-ionic emulsifier and/or surfactant and 9 % by weight methylated soy bean oil as stability enhancer in water as carrier;
2. a composition consisting of 35 % by weight of glycolic acid and 35 % by weight of caprylic acid in mineral oil, 8 % by weight of a mixture of sorbitan ethoxylate;
3. a composition consisting of 35 % by weight of glycolic acid and 35 % by weight of caprylic acid in mineral oil, 4,0 % by weight of sodium dioctyl sulphosuccinate as anionic emulsifier and 8 % by weight of a mixture of sorbitan ethoxylate as non-ionic emulsifier and/or surfactant;
4. a composition consisting of 35 % by weight of glycolic acid and 35 % by weight of caprylic acid in mineral oil, 8 % by weight of a mixture of sorbitan ethoxylate and castor oil ethoxylate as non-ionic emulsifier and/or surfactant and 9 % by weight methylated soy bean oil as stability enhancer in water as carrier. The compositions were formulated in water as carrier and were diluted before use.

### Example 1: Storage trial of the composition according to the invention and comparative compositions 1 to 4

A mixture according to the invention as well as a mixture of each of the four comparison mixtures were suspended in as little as possible water. For the purpose of the stability test 30 % suspensions in water were prepared. The suspensions were filled in 100 l containers and closed. The containers were stored for 3 days, 2 weeks, 1 month, and 6 months at temperatures of 25 °C ± 5 °C. At the end of each period the suspensions were checked for possible segregation. The results are shown in the following table 1.

**Table 1:**

| | Invention | Comp.1 | Comp.2 | Comp.3 | Comp.4 |
|---|---|---|---|---|---|
| 3 days | no segregation | no segregation | minor segregation | minor segregation | no segregation |
| 1 week | no segregation | no segregation | clear visible segregation | minor segregation | no segregation |
| 1 month | no segregation | minor segregation | strong segregation | strong segregation | minor segregation |
| 6 months | no segregation | minor segregation | strong segregation | strong segregation | minor segregation |

From these results it is clear that Me-Soy is exclusively responsible for improving the stability of the mixtures and that mixtures containing Me-Soy can be stored for up to half a year without segregation.

### Example 2: Evidence of the synergistic effect of two medium-chain fatty-acids in the composition according to the invention

The effect of three different mixtures was evaluated.

Composition A: 47,4 % by weight of caprylic acid, 31,6 % by weight of capric acid, 4,0 % by weight of sodium dioctyl sulphosuccinate, 8 % by weight of a mixture of sorbitan ethoxylate and castor oil ethoxylate and 9 % by weight methylated soy bean oil in water as carrier.

Composition B: 79,0 % by weight of caprylic acid, 4,0 % by weight of sodium dioctyl sulphosuccinate, 8 % by weight of a mixture of sorbitan ethoxylate and castor oil ethoxylate and 9 % by weight methylated soy bean oil in water as carrier.

Composition C: 79,0 % by weight of capric acid, 4,0 % by weight of sodium dioctyl sulphosuccinate, 8 % by weight of a mixture of sorbitan ethoxylate and castor oil ethoxylate and 9 % by weight methylated soy bean oil in water as carrier.

The compositions A to C were applied in different concentrations on different types of fruits and vegetables to test their effects on various harmful weeds. The effect of the applied compositions was evaluated for the first time five days after application to the plants to be protected from the harmful weeds. The percentage of inhibition of weed growth was measured. The measurements were repeated at different times up to a maximum of 42 days after application of the compositions to the plants. The main focus was to investigate whether a combination of two medium-chain fatty acids, in this case caprylic acid and capric acid, have a synergistic effect in terms of inhibiting the growth of harmful weeds.

Synergistic herbicide effect was assessed as published by Colby et al. (1967. Weeds 15(1): 20-22) using the following formula: $E = X + \left(Y/100\right) * \left(100-X\right)$

Therein, "E" represents an expectation value; "X" represents the degree of inhibition observed upon treatment with a substance 1 (caprylic acid, in the following: C8); and "Y" represents the degree of inhibition observed upon treatment with a substance 2 (herein: capric acid, in the following: C10). The expectation value indicates the theoretical amount of inhibition that would be observable in case of merely additive (i.e. non-synergistic) inhibition of a combination of substance 1 and substance 2. Both, "X" and "Y" are calculated in percent of inhibition. A control that was not treated with substance 1 and/or substance 2, served as base value having no inhibition, i.e. 0 % of inhibition.

In a next step, the actually observed amount of inhibition of a combination of substance 1 and substance 2 was compared to the expectation value, and used to quantify the synergy according to the following formula: $S = O / E$

Therein, "S" is the quotient in the amount of inhibition between the calculated additive inhibition ("E") and the actually observed amount of inhibition ("O"); "E" represents the expectation value as described above; and "O" denotes the observed amount of inhibition. In the event that "S" is a positive number, i.e. larger than 0, a combination of substance 1 and substance 2 was confirmed to inhibit the growth of the studied weed synergistically. When this document speaks of "synergism" or "acting synergistically" or the like, this always refers to combinations with a synergism factor (S) greater than 1.1, compared to the individual components (X and Y) of the combination
Fruit to be treated: Apple (one-time application)
Target weed *1: Myosotis macrosperma (Largeseed forgot-me-not)*
Application rate: 5,4 I/ha

| Inhibition | 5 days | 14 days | 27 days | 42 days |
|---|---|---|---|---|
| C8C10 | 72,5 % | 70% | 67,5 % | 60 % |
| C8 (X) | 57,5% | 50,0 % | 45,0 % | 45,0 % |
| C10 (Y) | 9% | 7,5 % | 7,0 % | 6,0 % |
| E | 61,33% | 53,75 % | 48,85 | 48,30 % |
| S | 1,18 | 1,30 | 1,38 | 1,24 |

Target weed 2: *Panicum dichotomiflorum* (Autum millet)
Application rate: 5,4 l/ha

| Inhibition | 5 days | 14 days | 27 days | 42 days |
|---|---|---|---|---|
| C8C10 | 70,0 % | 67,5% | 57,5 % | 47,5 % |
| C8 (X) | 52,5% | 45,0 % | 42,5 % | 40,0 % |
| C10 (Y) | 9,6 % | 8,5 % | 7,0 % | 4,8 % |
| E | 57,06 % | 49,68 % | 46,53 | 42,88 % |
| S | 1,23 | 1,36 | 1,24 | 1,11 |

Target weed 3: *Veronica hederitolia (Ivyleaf speedwell)*
Application rate: 5,4 I/ha

| Inhibition | 5 days | 14 days | 27 days | **42** days |
|---|---|---|---|---|
| C8C10 | 70,0 % | 67,5% | 67,5 % | 60 % |
| C8 (X) | 50,0% | 50,0 % | 50,0 % | 43,3 % |
| C10 (Y) | 9,8 % | 7,6 % | 7,4 % | 6,8 % |
| E | 54,90% | 53,80 % | 53,7 | 47,16 % |
| S | 1,28 | 1,25 | 1,26 | 1,27 |

Fruit to be treated: Grapevine (one-time application)
Target weed *1: Lactuca serriola (Compass plant)*
Application rate: 5,4 I/ha

| Inhibition | 5 days | 14 days | 27 days | 42 days |
|---|---|---|---|---|
| C8C10 | 88,0 % | 88,0% | 88,0 % | 83,0 % |
| C8 (X) | 65,0 % | 67,5 % | 67,5 % | 57,5 % |
| C10 (Y) | 10,1 % | 9,6 % | 9,5 % | 9,0 % |
| E | 68,54% | 70,62 % | 70,59 | 61,33 % |
| S | 1,28 | 1,25 | 1,5 | 1,35 |

Fruit to be treated: Plum (application twice)
Target weed *1: Galinsoga parviflora (Gallant soldier)*
Application rate: 5,4 l/ha

| Inhibition after first application | 15 days | 22 days |
|---|---|---|
| C8C10 | 75,0 % | 37,5 % |
| C8 (X) | 42,5% | 20,0 % |
| C10 (Y) | 14,0 % | 9,5 % |
| E | 50,55 % | 27,6 % |
| S | 1,48 | 1,36 |

| Inhibition after 2nd application | 15 days | 23 days | 30 days |
|---|---|---|---|
| C8C10 | 65,0 % | 60,0 % | 33,8 % |
| C8 (X) | 37,5% | 31,3 % | 7,5 % |
| C10 (Y) | 12,8 % | 11,5 % | 10,2 % |
| E | 45,5 % | 39,2 % | 16,94 % |
| S | 1,43 | 1,53 | 1,99 |

Crop to be treated: Potato (application twice)
Target 1: leaf desiccation
Application rate: 18 l/ha

| Inhibition after 1st appl. | 1 day | 2 days | 3 days | 6 days |
|---|---|---|---|---|
| C8C10 | 13,8 % | 25,0 % | 55,0 % | 81,3 % |
| C8 (X) | 7,5% | 17,5 % | 36,3 % | 68,8 % |
| C10 (Y) | 5,8 % | 6,0 % | 6,0 % | 5,7 % |
| E | 12,86 % | 22,45 % | 40,12 % | 70,58 % |
| S | 1,07 | 1,11 | 1,37 | 1,15 |

inhibition after

| 2nd appl. | 1 day | 2 days | 3 days | 7 days | 14 days |
|---|---|---|---|---|---|
| C8C10 | 85,0 % | 86,3 % | 88,8 % | 91,3 % | 97,5 % |
| C8 (X) | 72,5% | 75,0 % | 81,3 % | 85,0 % | 88,8 % |
| C10 (Y) | 5,8 % | 5,8 % | 5,8 % | 5,7% | 5,4 % |
| E | 74,09 % | 76,45 % | 82,38 % | 85,86 % | 89,4 % |
| S | 1,15 | 1,13 | 1,08 | 1,06 | 1,09 |

From the results obtained, the synergistic effect of C8 and C10 in the chosen formulation can clearly be seen. It can also be seen that C10 alone always has a significantly lower effectiveness, which can be attributed to its poor solubility in water. Differences in the respective effects of C8 and C10 at comparable times can be explained on the one hand by the different environmental conditions prevailing, such as temperature, humidity and degree of cloudiness, and on the other hand by the surface conditions on the treated plant or fruit. Despite these differences, all experiments showed a more or less pronounced synergistic effect between the two specifically selected medium-chain fatty acids, namely caprylic acid and capric acid.

## Claims

**1.** A herbicide composition consisting of at least one fatty acid or a salt thereof, an emulsifier and/or solubilizer, as well as, if necessary further auxiliary substances, **characterized in that** the composition consists of a total amount of between 60 and 90 % by weight, preferably between 65 and 80 % by weight of a mixture consisting of two medium chain fatty acids, especially a mixture of C8 and C10 fatty-acids, up to 14 % by weight of a mixture of at least two different emulsifiers and/or surfactants, up to 10 % by weight of a stability enhancer and optionally one efficacy enhancer and a diluent.

**2.** A herbicide composition according to claim 1, **characterized in that** the mixture of two medium chain fatty acids consists of 40 to 50 % by weight, especially 45 to 49 % by weight of caprylic acid and 28 to 35 % by weight, especially 29 to 33 % by weight of capric acid.

**3.** A herbicide composition according to claim 1 or 2, **characterized in that** the at least two different emulsifiers and/or surfactants contain at least one anionic and at least one non-ionic surfactant and/or emulsifier.

**4.** A herbicide composition according to claim 3, **characterized in that** it contains up 5 % by weight, preferably up to 4,5 % by weight of an anionic surfactant and/or emulsifier, and up to 9 % by weight, preferably up to 8 % by weight of one, preferably two different non-ionic surfactants and/or emulsifiers.

**5.** A herbicide composition according to claim 1, 2 or 3, **characterized in that** the emulsifies and surfactants are selected from liquid polymers selected from the group consisting of polyoxyethylene alkyl ether phosphate, polyalkyleneoxide block copolymers, modified styrene acrylic copolymers, polymeric esters or alkoxylated phosphate esters or mixtures thereof.

**6.** A herbicide composition according to anyone of claims 1 to 4, **characterized in that** methylated soy bean oil is included as the stability enhancer.

**7.** A herbicide composition according to anyone of claims 1 to 5, **characterized in that** up to 12 % by weight, preferably up to 4 % by weight of an efficacy enhancer are contained.

**8.** A herbicide composition according to claim 6, **characterized in that** the efficacy enhancer is selected from acetic acid, citric acid, lactic acid, oxalic acid or mixtures of two or more thereof.

**9.** A herbicide composition according to anyone of claims 1 to 8, **characterized in** it further contains additional amounts of methylated-soybean oil as a diluent.

**9.** A herbicide composition according to anyone of claims 1 to 7, **characterized in that** it exists as a finely divided oil in water emulsion.
